Europäisches Patentamt

European Patent Office

Office européen des brevets

(11) Publication number: **0 178 843 B1**

# EUROPEAN PATENT SPECIFICATION

(45) Date of publication of patent specification: **15.01.92**  (51) Int. Cl.⁵: **B24B 7/16**

(21) Application number: **85307219.7**

(22) Date of filing: **09.10.85**

---

(54) **Surface grinding machine.**

---

(30) Priority: **15.10.84 JP 215336/84**
      **15.10.84 JP 215337/84**

(43) Date of publication of application:
    **23.04.86 Bulletin  86/17**

(45) Publication of the grant of the patent:
    **15.01.92 Bulletin  92/03**

(84) Designated Contracting States:
    **AT BE CH DE FR GB IT LI LU NL SE**

(56) References cited:
    **CH-A- 223 367**
    **GB-A- 1 422 908**
    **GB-A- 2 057 930**
    **JP-A-58 126 051**
    **US-A- 1 929 439**

    **PATENT ABSTRACTS OF JAPAN, vol. 7, no.
    237 (M-250)[1382], 21st October 1983; & JP -
    A - 58 126 051 (TOUKIYOU SEIKI
    KOUSAKUSHIYO) 27-07-1983**

    **PATENT ABSTRACTS OF JAPAN, vol. 8, no.
    230 (M-333)[1667], 23rd October 1984; & JP -
    A - 59 110 540 (FURUKAWA DENKI KOGYO)
    26-06-1984 (Cat. A)**

(73) Proprietor: **NISSEI INDUSTRIAL CO., LTD.**
    **6-23, Minowa 3-chome**
    **Toyonaka-shi Osaka-fu(JP)**

    Proprietor: **ASAHI DIAMOND INDUSTRIAL CO.
    LTD.**
    **2-3 Motoakasaka 1-chome**
    **Minato-ku Tokyo(JP)**

(72) Inventor: **Nishio, Kiyoshi**
    **NISSEI INDUSTRIAL CO. LTD. 6-23 Minowa
    3-chome**
    **Toyonaka-shi Osaka-fu(JP)**
    Inventor: **Tanaka, Arihisa ASAHI DIAMOND IN-
    DUSTRIAL CO. LTD.**
    **2-3 Motoakasaka 1-chome Minato-ku
    Tokyo(JP)**

(74) Representative: **Gilmour, David Cedric Fran-
    klyn et al**
    **POTTS, KERR & CO. 15 Hamilton Square
    Birkenhead Merseyside L41 6BR(GB)**

---

## Description

The present invention relates to a "face grinder" or surface grinding machine used for grinding, for example, the end surface of a cylindrical workpiece.

A surface grinding machine having the structure shown in Figs. 4 to 7 is generally known and comprises too wheel heads 4, one for rough grinding and the other for finishing, which are provided side by side on a support bed 1 and mounted such as to be vertically displaceable thereon. A rotary indexing table 6 is disposed under the wheel heads so as to face such, as shown in Figs. 4 and 5, and a multiplicity of chucks 8 are disposed on the index table 6, as shown in Figs. 6 and 7. The wheel heads 4 are provided with cup-shaped grinding wheels 2 which are rotated by drive motors 3. The table 6 and the chuck 8 are rotated by a drive motor 5 and a drive motor 7, respectively. A workpiece 9 is supplied to the chuck 8 at the loading position of the table 6 and is held by an appropriate method. The grinding wheel 2 cuts the workpiece 9 which is being rotated together with the chuck 8, whereby the end surface of the workpiece 9 is ground to a predetermined dimension.

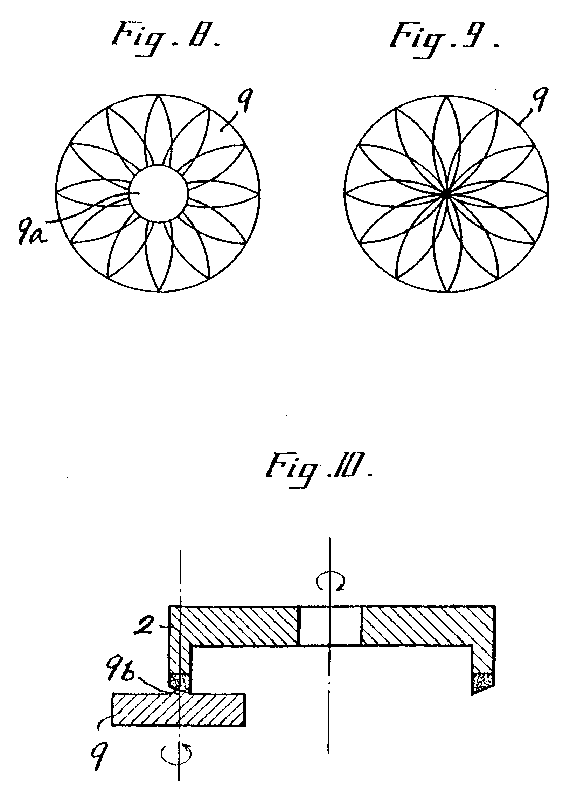

The end surface of the workpiece 9 which has been ground by the known surface grinding machine bears the grinding marks shown in Fig. 8 if the workpiece has a centre hole 9a and bears the grinding marks shown in Fig. 9 if the workpiece has no centre hole. Accordingly, when the wheel 2 becomes worn locally, the workpiece 9 without a centre hole 9a has a protruding portion 9b (see Fig. 10) left unground due to the partial wear of the wheel 2, so that the required working accuracy for the workpiece 9 is not obtained. As a result, the life of the wheel 2 is short, thereby necessitating frequent changes of the wheel, and it is difficult to obtain good working efficiency.

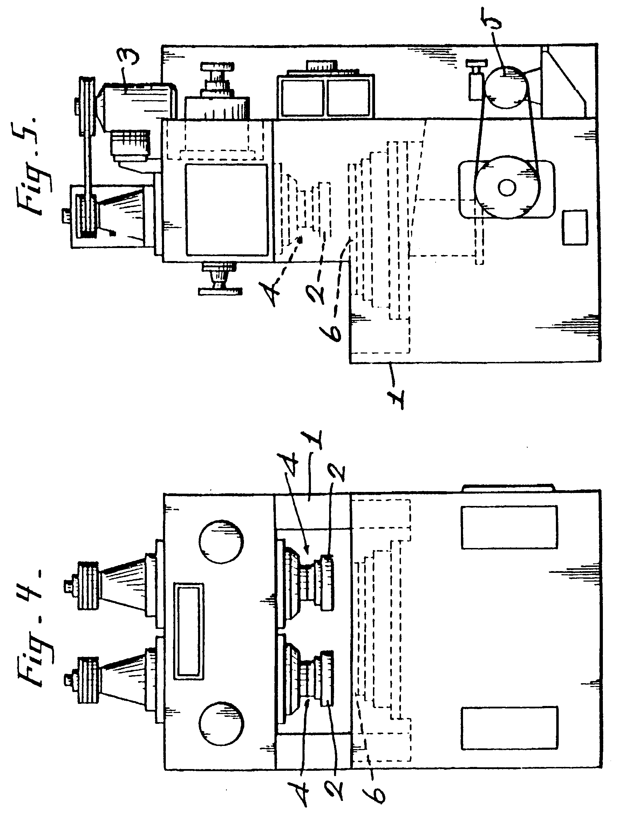

Japanese Specification -A-58126051 discloses a surface grinding machining comprising a rotary wheel support or machine head supporting a grinding wheel (3b), at least one chuck (14) carried by a support table (4) or bed for receiving work-pieces to be ground and being disposed facing said grinding wheel (3b) when located on said head, each said chuck (14) and said wheel head including the wheel stock or head are mounted so as to be rotatable (see Figure 4), whereby each said chuck (14) is also mounted so that its rotary axis is eccentrically rotatable by drive means (19-23) about the axis of a chuck holder (5). It will be appreciated that the grinding wheels and supports rotate about a common axis and that each chuck (14) rotates only about its own axis which is fixed relative to rotary support table (4).

Accordingly, it is an object of the present invention to provide a surface grinding machine which never or rarely produces a protruding portion due to partial wheel wear, unlike hitherto surface grinding machines.

To achieve this aim, a surface grinding machine according to the present invention comprises a rotary wheel support or machine head (11) for supporting a cup-shaped grinding wheel (12) which is vertically displaceable and adjustable, at least one chuck (14) carried by a support table (13,27) or bed for receiving work-pieces (10) to be ground and being disposed facing said grinding wheel (12) when located on said head (11), the or each said chuck (14) and said wheel head (11) including the wheel stock or head (11) are mounted so as to be rotatable; characterised by the feature that the grinding wheel (12) including any wheel stock or head, is mounted on the machine head (11) to extend around and eccentrically relative to the axis of rotation (0') of the rotary grinding wheel support of the machine head (11) and having a single common axis of rotation (0') with said rotary support of the wheel head.

The machine head is the rotatable part of the machine which supports the cup-shaped wheel including any wheel stock or head for mounting on the machine head.

The invention will be described further, by way of example, with reference to the accompanying drawings, in which:

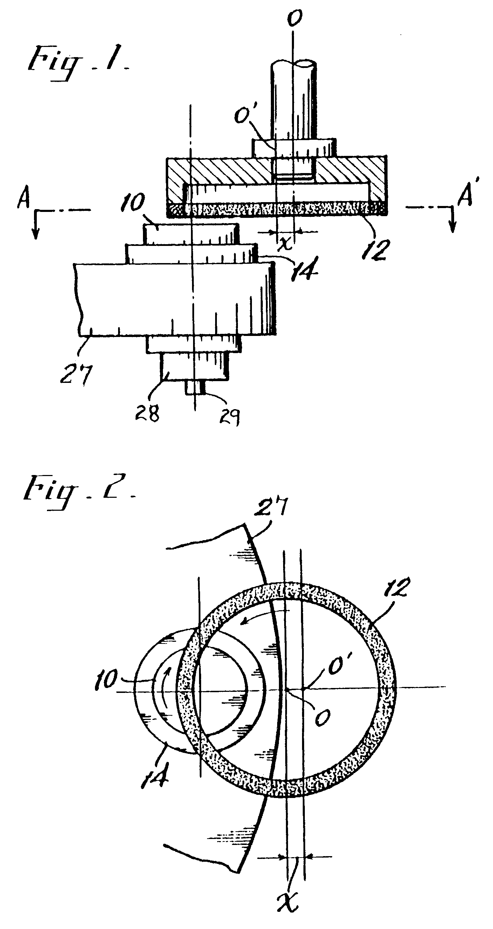

Fig. 1 is a vertical fragmentary elevational view in part section of a part of a grinding machine according to the invention;

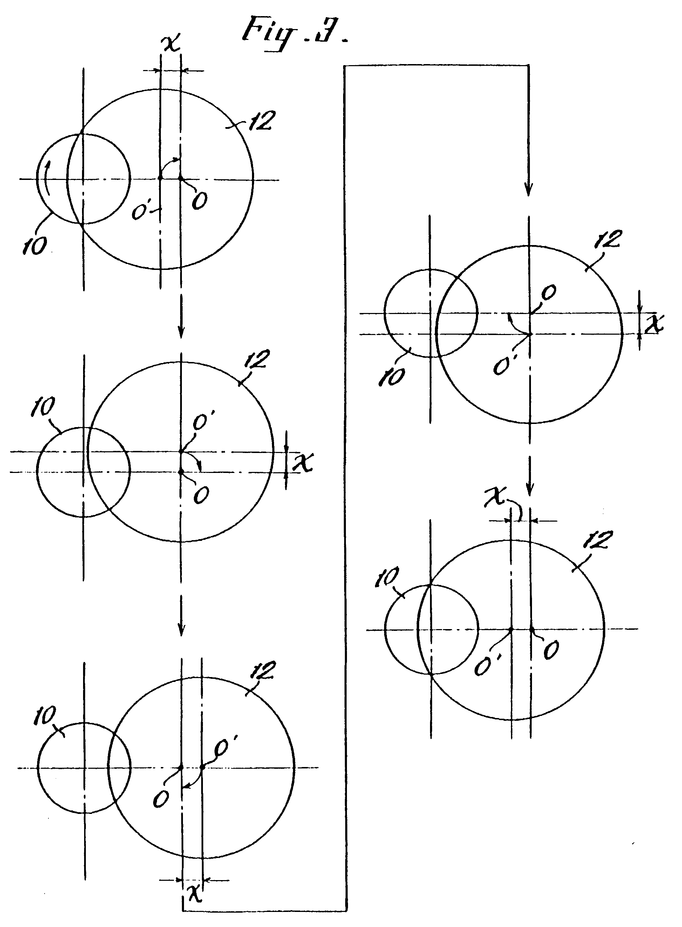

Fig. 2 is a horizontal sectional view of the embodiment shown in Fig. 1 taken along the line A - A' of Fig. 1;

Fig. 3 is an explanatory schematic plan view illustrating the path of a workpiece under the grinding wheel of the machine of Fig. 2;

Fig. 4 is a schematic front elevational view of a conventional surface grinding machine;

Fig. 5 is a side elevational view of the machine of Fig. 4;

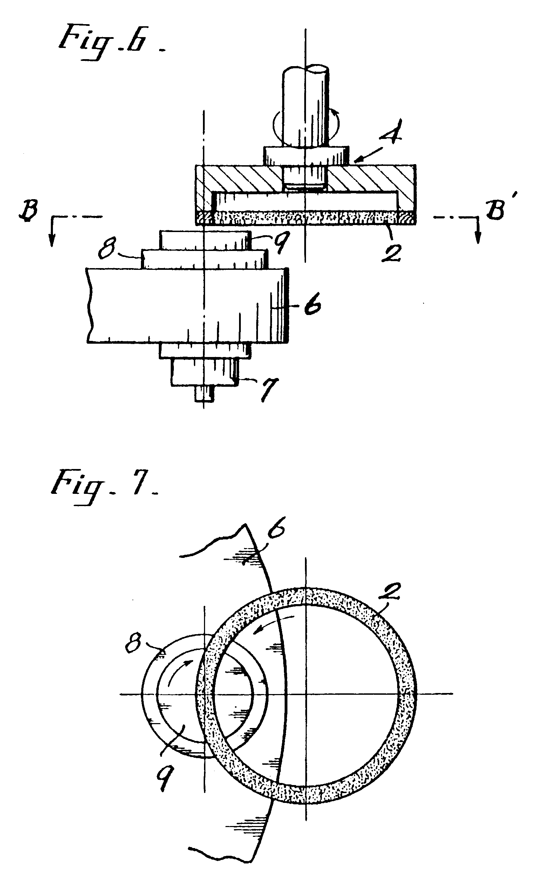

Fig. 6 is a fragmentary vertical section of a part of the machine of Fig. 4;

Fig. 7 is a sectional view of the surface grinding machine shown in Fig. 5; taken along the line B - B';

Figs. 8 and 9 illustrate the grinding marks which are produced on the end surfaces of work-pieces; and

Fig. 10 is a vertical sectional view of a wheel and a workpiece which illustrates the wheel in a condition where it has been partially worn and a protruding portion is left unground in the centre of the workpiece.

Referring now to Figs. 1 to 3, which show an embodiment of the invention, the centre 0 of rotation of a cup-shaped grinding wheel 12 including its head is deviated by the necessary distance X from the centre 0' of the wheel so that the wheel and head is eccentric with respect to the axis of rotation 0 thereof. A plurality of chucks 14 (only one shown) are provided on rotary indexing table 27 and each chuck 14 is connected to a motor 28 provided under the index table 27 by a shaft 29. The workpiece 10 therefore rotates only about its own axis.

This structural arrangement moves the grinding wheel 12 in such a manner that it follows the path as shown in Fig. 3, enabling the end surface of the workpiece to be ground without a protruding centre portion remaining unground.

As is described above, with operation of the surface grinding machine constructed according to the present invention, no protruding portion remains unground at the centre of the grinding surface of a workpiece even when a grinding wheel is partially worn. Thus high working accuracy is obtained and the life of a grinding wheel is prolonged. In particular, the prolonged life of a wheel, which dispenses with the need for frequent changing of the wheel, improves working efficiency.

Where technical features mentioned in any claim herein are followed by reference symbols, those reference symbols are included solely for the purpose of increasing the intelligibility of the claims.

## Claims

1. A surface grinding machine comprising a rotary wheel support or machine head (11) for supporting a cup-shaped grinding wheel (12) which is vertically displaceable and adjustable, at least one chuck (14) carried by a support table (13,27) or bed for receiving work-pieces (10) to be ground and being disposed facing said grinding wheel (12) when located on said head (11), the or each said chuck (14) and said wheel head (11) including the wheel stock or head (11) are mounted so as to be rotatable; characterised by the feature that the grinding wheel (12) including any wheel stock or head, is mounted on the machine head (11) to extend around and eccentrically relative to the axis of rotation (0') of the rotary grinding wheel support of the machine head (11) and having a single common axis of rotation (0') with said rotary support of the wheel head.

2. A machine as claimed in claim 1, in which said chuck (14) is rotatable about the axis (0) of the chuck holder (15,16) and the drive means includes a drive motor (21) and a planetary gear mechanism (25,26).

## Revendications

1. Rectifieuse de surface, comprenant un support rotatif de roue ou tête de machine (11), pour supporter une roue de rectification (12) en forme de coupe, déplaçable et réglable verticalement, au moins un mandrin de serrage (14) porté par une table de support (13,27) ou un banc pour recevoir des pièces à usiner (10) devant être rectifiées et disposées face à ladite roue de rectification (12) une fois montées sur ladite tête (11), le, ou chaque, mandrin de serrage (14) et ladite tête de roue (11), y compris la monture ou tête de roue (11), étant montée à rotation, caractérisé par le fait que la roue de rectification (12), y compris une quelconque monture ou tête de roue (11), est montée sur la tête de machine (11), pour s'étendre autour et excentriquement de l'axe de rotation (0') du support rotatif de roue de rectification de la tête de machine (11) et présentant un unique axe de rotation (0') commun, avec ledit support rotatif de la tête de roue.

2. Rectifieuse selon la revendication 1, dans laquelle ledit mandrin (14) est susceptible de tourner autour de l'axe (0) du support de mandrin (15,16) et le moyen d'entraînement comprend un moteur d'entraînement (21) et un mécanisme à engrenages planétaires (25,26).

## Patentansprüche

1. Flachschleifmaschine mit einer drehbaren Aufnahmeeinrichtung (11) zur Aufnahme eines tassenförmigen Schleifrades (12), das vertikal verschiebbar und ausrichtbar ist, mit wenigstens einer Spannvorrichtung (14) an einer Aufnahmeplatte (13,27) oder einem Bett zur Aufnahme von zu schleifenden, in Blickrichtung auf das Schleifrad (12) festlegbaren Werkstücken (10), wobei die Spannvorrichtung (14) und/oder die Aufnahmeeinrichtung (11) einschließlich den zugehörigen Befestigungselementen und Radteilen drehbar gelagert sind,
dadurch gekennzeichnet, daß das Schleifrad (12) einschließlich den zugehörigen Befestigungselementen und Radteilen so an der Maschine befestigt ist, daß es sich exzentrisch zur Drehachse (0') der drehbaren Aufnahmeeinrichtung für das Schleifrad herum bewegt und mit dieser Aufnahmeeinrichtung eine einzige Drehachse gemeinsam hat.

2. Flachschleifmaschine nach Anspruch 1, dadurch gekennzeichnet, daß die Spannvorrichtung (14) um die Achse (0) ihrer Haltevorrichtung (15,16) drehbar gelagert ist und die Antriebsmittel einen Motor (21) und ein Planeten-
getriebe (25,26) aufweisen.

Fig. 1.

Fig. 2.

Fig.3.

Fig. 5.

Fig. 4.

Fig.6.

Fig.7.

Fig. 8.

Fig. 9.

Fig. 10.